# EUROPEAN PATENT APPLICATION

(11) **EP 4 507 161 A2**
(43) Date of publication of application: **12.02.2025**
(21) Application number: 24193480.1
(22) Date of filing: 08.08.2024
(51) Int. Cl.: H02J 7/00

(54) **SYSTEMS AND METHODS FOR PROVIDING ALTERNATING DIRECT CURRENT**

(30) Priority: 11.08.2023 US 202363519091 P
(71) Applicant: Redd, Michael Paul, Gainesville, Georgia 30506 (US)
(72) Inventor: Redd, Michael Paul, Gainesville, Georgia 30506 (US)
(74) Representative: Barker Brettell LLP

(57) **Abstract**

Embodiments of the present disclosure are directed to a system for providing alternating direct current can include a first battery (210); a second battery (212); a load (222); a first solid state relay (206) configured to switch the first battery on and off; a second solid state relay (208) configured to switch the second battery on and off; and a microprocessor (204) configured to control the first and second solid state relays, wherein the microprocessor is configured to cause the first and second solid state relays to switch the first and second batteries on and off in an alternating manner such that a constant current it supplied to the load.

## Description

### CROSS REFERENCE TO PRIORITY APPLICATION

This application claims priority to U.S. Application No. 63/519,091, filed August 11, 2023, which is herein incorporated by reference in its entirety.

### TECHNICAL FIELD

Embodiments of the present disclosure relate to using one or more direct current batteries in an alternating fashion, which can reduce the energy lost through excess heat buildup while providing a constant direct current to the load.

### BACKGROUND OF THE DISCLOSURE

Batteries enable a plethora of devices to operate without being tethered to a power source, such as an alternating current power source. Batteries are particularly important to mobile or portable devices such as tools, vehicles, and other electronics like cellular phones, laptops, tablets, mobile radios, global positioning system (GPS) units, and the like. Batteries can also be used for backup power sources for larger devices when their primary power source is not available.

Although there are newer and better battery chemistries and technologies being discovered regularly, a limiting factor in these developments is the total power output before a recharge is necessary. When batteries get too hot, some of the energy in the system is converted from usable energy to heat, reducing the usable output. Additionally, each time a battery is drained down and charged back up, there is less total energy available. This can eventually result in an unusable battery.

### SUMMARY OF THE DISCLOSURE

According to one aspect of the present disclosure, a system for providing alternating direct current can include a first battery; a second battery; a load; a first solid state relay configured to switch the first battery on and off; a second solid state relay configured to switch the second battery on and off; and a microprocessor configured to control the first and second solid state relays, wherein the microprocessor is configured to cause the first and second solid state relays to switch the first and second batteries on and off in an alternating manner such that a constant current is supplied to the load.

In some embodiments, the microprocessor can be configured to cause the first and second solid state relays to switch the first and second batteries on and off in an alternating manner at a frequency of 144 Hz. In some embodiments, the microprocessor can be powered by an independent power source. In some embodiments, the microprocessor can be powered by at least one of the first battery and the second battery. In some embodiments, the system can include a diode bridge, wherein the constant current is supplied to the load via the diode bridge. In some embodiments, the first solid state relay can be connected to a positive terminal of the first battery and a first end of the diode bridge; and the second solid state relay can be connected to a positive terminal of the second battery and a second end of the diode bridge.

In some embodiments, a negative terminal of the first battery can be connected to the first end of the diode bridge; and a negative terminal of the second battery can be connected to the second end of the diode bridge. In some embodiments, the system can include a diode connected between the negative terminal of the first battery and the first end of the diode bridge. In some embodiments, the system can include a diode connected between the negative terminal of the second battery and the second end of the diode bridge. In some embodiments, the system can include a capacitor connected between the diode bridge and the load.

In some embodiments, a first output of the diode bridge can be connected to a positive side of the capacitor and a second output of the diode bridge can be connected to a negative side of the capacitor. In some embodiments, the capacitor can be configured to provide the constant current to the load. In some embodiments, the microprocessor can be configured to cause the first and second solid state relays to switch the first and second batteries on and off in an alternating manner with a rest rate of about five milliseconds.

According to another aspect of the present disclosure, a method for providing alternating direct current can include enabling a first battery to provide current to a load; disabling the first battery such that the first battery does not provide current to the load; enabling a second battery to provide current to the load; disabling the second battery such that the second battery does not provide current to the load; and repeating the enabling and disabling to provide a constant current to the load.

In some embodiments, enabling the first battery can include turning the first battery on via a first solid state relay. In some embodiments, enabling the second battery can include turning the second battery on via a second solid state relay. In some embodiments, repeating the enabling and disabling can be performed at a frequency of 144 Hz. In some embodiments, repeating the enabling and disabling can be performed with a rest rate of about five milliseconds. In some embodiments, the method can include providing the current to a diode bridge. In some embodiments, the method can include providing the current to a capacitor after the diode bridge, the capacitor smoothing the current and providing the constant current to the load.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the system may have corresponding features definable and/or combinable with respect to a method or vice versa, and these embodiments are specifically envisaged.

### BRIEF DESCRIPTION OF THE FIGURES

Various objectives, features, and advantages of the disclosed subject matter can be more fully appreciated with reference to the following detailed description of the disclosed subject matter when considered in connection with the following drawings, in which like reference numerals identify like elements.

The drawings are not necessarily to scale, or inclusive of all elements of a system, emphasis instead generally being placed upon illustrating the concepts, structures, and techniques sought to be protected herein.
FIG. 1 is a schematic representation of a standard battery system where the battery is connected directly to the load and is always on.
FIG. 2 is a schematic representation of an exemplary embodiment of an alternating direct current battery system according to some embodiments of the present disclosure.
FIG. 3 is an example process for operating an alternating direct current battery system according to some embodiments of the present disclosure.
FIG. 4 is a schematic representation of another exemplary embodiment of an alternating direct current battery system according to some embodiments of the present disclosure.

### DESCRIPTION

The following detailed description is merely exemplary in nature and is not intended to limit the invention or the applications of its use.

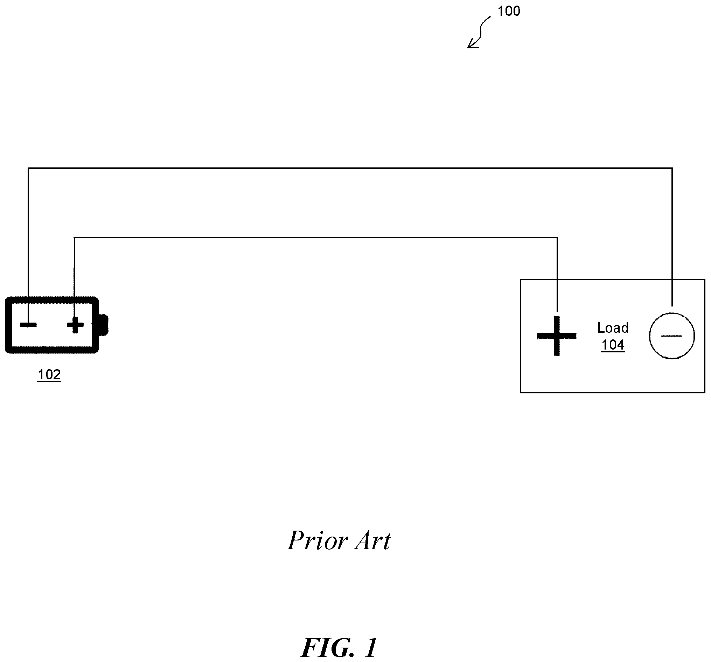

FIG. 1 is a schematic representation of a standard battery system 100 where the battery is connected directly to the load and is always on. In system 100, a battery 102, which comprises a positive terminal and a negative terminal, provides current to a load 104. Because the battery 102 is a direct current source, a constant supply of current is supplied to the load 104 from the battery 102.

However, standard battery systems, such as system 100 of FIG. 1, encounter various problems with heating and efficiency. Heat generated within the battery 102 not only allows the stored energy to escape the system, but it can cause degradation of the battery 102 itself. High temperatures within the battery 102 can ultimately result in thermal runaway, which can cause the electrolyte interface to break down. In addition, extremely low or high temperatures can result in the formation of dendrites that can create a short between the electrodes (i.e., the positive and negative terminals). It has been discovered that when the battery is at ambient temperature (i.e., between about 50- and 100-degrees Fahrenheit), heat is limited to acceptable levels and does not affect the battery. Accordingly, preventing such heat variation in the battery 102 can avoid the aforementioned temperature related problems and allow for a more efficient battery system that experiences less degradation.

Embodiments of the present disclosure are directed to a system that alternates between direct current sources, such as batteries, when providing current to a load. In particular, rather than using one larger battery to provide a constant power source to an output device, the disclosed embodiments, utilize multiple batteries that are switched on and off at various rates and with varied rest periods between each battery's on-state. In some embodiments, each battery can have an optimum pulse and rest rate based on the power output required for the particular application and the number of batteries used. In some embodiments, two batteries may be used, although this is not limiting. For example, in certain applications, three, four, or more smaller batteries can be used. In addition, the disclosed systems can utilize an electronically controlled circuit that controls when each battery will turn off and on (i.e., be disabled and enabled) and for how long. The disclosed system can also include a capacitor to stabilize the voltage output while the various batteries are pulsing on and off.

The disclosed embodiments can reduce heat buildup in a battery system during its operation. This allows each battery to provide a greater usable output than if it was constantly providing power to the device because the energy lost as heat is reduced. The disclosed battery system may also be equipped with means to control its temperature, thus being able to substantially eliminate or prevent degradation of the battery core due to heat and ultimately improve efficiency.

The disclosed embodiments can supply power to a broad range of devices, including but not limited to, various portable electronic devices (e.g., mobile phones, tablets, laptops, radios), toys, medical devices, electric vehicles (e.g., cars, scooters, motorcycles, airplanes, hovercrafts), military devices (e.g., helmet mounted displays and surveillance and reconnaissance equipment), and numerous others. The embodiments described herein should not be construed as limiting the invention to a particular application or field of applications.

For example, the disclosed embodiments could be used for electric cars and/or hybrid vehicles, allowing them to travel further without the need of gasoline or other fossil fuels, in turn reducing and/or preventing greenhouse gases from entering the atmosphere. Finally, by expanding such technology to a range of electronic devices, a longer time between charges may occur which would require less electrical power generation by coal, reducing emissions of greenhouse gases.

In some embodiments, in replacing a system that would typically use a battery of a certain amp hour rating, the amp hour rating of the batteries used in the disclosed system can add up to [more than] the original amp hour rating of the larger battery that is being replaced. that utilizes multiple batteries.

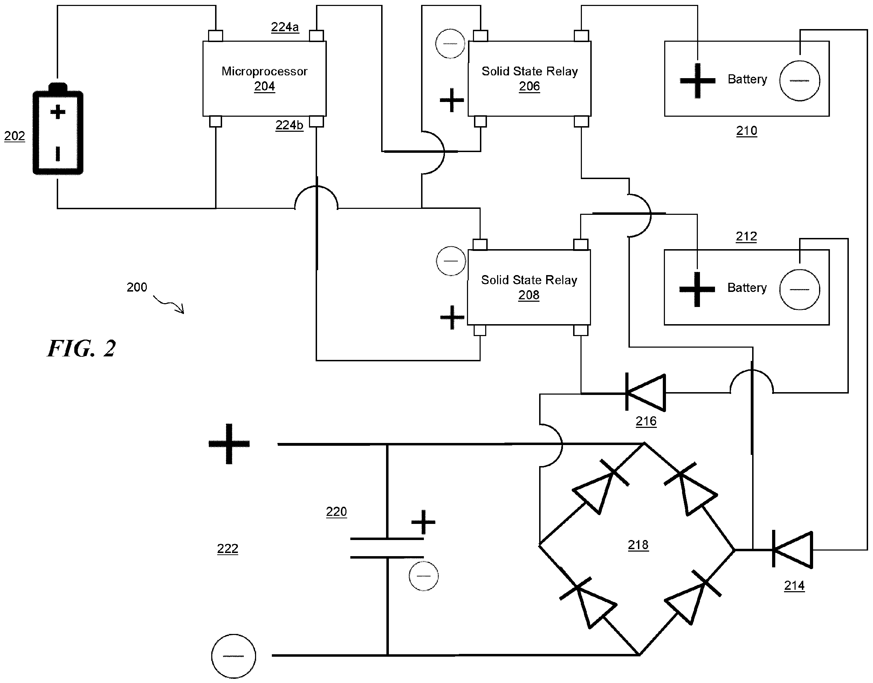

FIG. 2 is a schematic representation of an exemplary embodiment of an alternating direct current battery system 200 according to some embodiments of the present disclosure. In some embodiments, system 200 can include batteries 210 and 212, a microprocessor 204, solid state relays (SSRs) 206 and 208, a diode bridge 218, a capacitor 220, and a load device 222. In some embodiments, the system 200 can also optionally include diodes 214 and 216, each residing between one of the batteries 210 and 212 and their respective connection to the diode bridge 218.

In some embodiments, the microprocessor 204 can include predefined instructions and timing information that defines pulse and rest rates for controlling the system 200 and switching between the batteries 210 and 212. For example, the microprocessor 204 can switch between the batteries at a frequency of about 144 Hz with a pulse rest of 5 ms. In some embodiments, the microprocessor 204 comprises an output for each solid-state relay 206 and 208: output 224a and output 224b. In some embodiments, the microprocessor 204 can be powered by an independent power source 202 (e.g., a 5V battery). In other embodiments, the microprocessor 204 can be powered by one or more of the batteries 210 and 212 with a voltage regulator (not shown). In some embodiments, the outputs 224a-b of the microprocessor 204 connect to the SSRs 206 and 208, respectively. In particular, each output 224a-b connects to the positive terminal of the respective SSR.

In some embodiments, the SSRs 206 and 208 are also connected to the independent power source 202, such as at the negative terminal. The SSRs 206 and 208 are also connected to the batteries 210 and 212, respectively, and configured to turn each relay on and off as specified by the microprocessor 204. Such actions of turning the relays on and off achieves a desired pulse and rest rate for switching between the batteries 210 and 212. In some embodiments, the SSRs 206 and 208 are connected to the positive terminals of the batteries 210 and 212. This allows for the current flowing through the system to be turned on or off to the diode bridge as each SSR is turned on and off.

In some embodiments, the negative terminal of the batteries 210 and 212 are connected to opposite sides of the diode bridge 218, which is configured to control the flow of current in the system. The connection to opposite sides of the diode bridge 218 can cause the SSRs 206 and 208 to be isolated from each other when one is turned on and the other is turned off. The current can therefore flow through the diode bridge 218 and out to the capacitor 220. The capacitor 220 can be configured to provide a constant and regulated power supply to the load device 222 while the batteries 210 and 212 are switching.

It is important to note that, while system 200 utilizes two batteries, the disclosed embodiments are not limited to two batteries, and multiple batteries may be used. In the embodiments where more than two batteries are used, the system would include additional SSRs to control the additional batteries, as well as additional diode bridges.

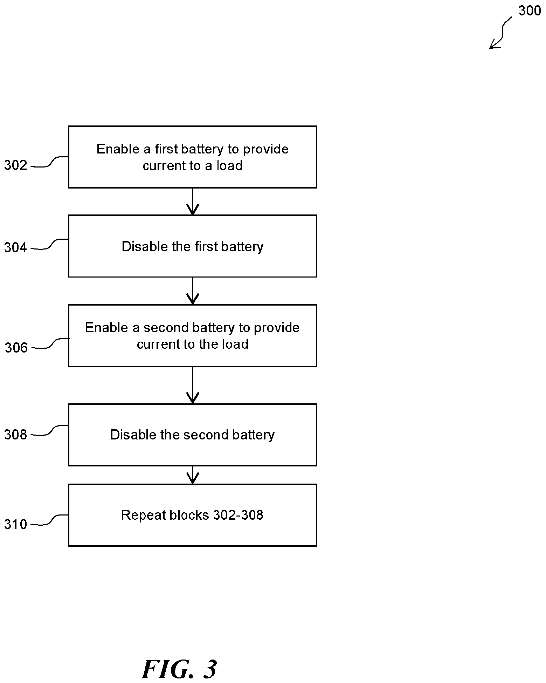

FIG. 3 is an example process 300 for operating an alternating direct current battery system according to some embodiments of the present disclosure. In some embodiments, process 300 can be performed by the microprocessor 204 within the system 200. At block 302, the microprocessor 204 enables (i.e., turns on) a first battery (e.g., battery 210) such that it provides current to the load 222. In some embodiments, enabling the first battery 210 can include turning the SSR 206 on and the SSR 208 off, so that the second battery 212 is not providing current to the load 222. At block 304, the microprocessor 204 disables the first battery 210 via the SSR 206. At block 306, the microprocessor 204 enables the second battery 212 to provide current to the load 222. In some embodiments, enabling the second battery 212 can include turning the SSR 208 on and the SSR 206 off, such as the first battery 210 is not providing current to the load 222. At block 308, the microprocessor 204 disables the second battery via the SSR 208. At block 310, the microprocessor 204 repeats blocks 302-308, such as at a frequency of around 144 Hz. In some embodiments, there may be a rest period between one battery being disabled and the other battery being enabled. In some embodiments, the rest rate can be about ten milliseconds. In some embodiments, the rest rate can match the frequency rate.

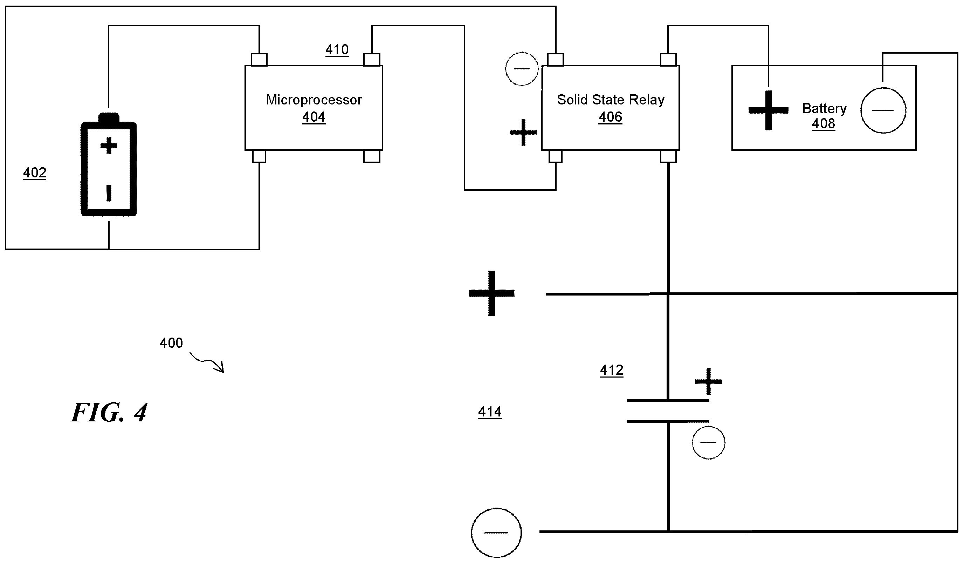

FIG. 4 is a schematic representation of another exemplary embodiment of an alternating direct current battery system 400 according to some embodiments of the present disclosure. In particular, the system 400 can include a single direct current battery 408, a microprocessor 404, an SSR 406, a capacitor 412, and a load device 414.

In some embodiments, the microprocessor 404 can include predefined instructions and timing information that defines pulse and rest rates for controlling the system 400 by switching the battery 408 between an off and on state. For example, the microprocessor 404 can switch the battery 408 between on and off states at a frequency of about 144 Hz with a pulse rest of about 5 ms. In some embodiments, the microprocessor 404 can include an output 401 for the SSR 406. In some embodiments, the microprocessor 404 can be powered by an independent power source 202 (e.g., a 5V battery). In other embodiments, the microprocessor 404 can be powered by the battery 408 with a voltage regulator (not shown). In some embodiments, the output 410 of the microprocessor 404 can connect to the positive terminal of the SSR 406.

In some embodiments, the SSR 406 can also be connected to the independent power source 402, such as at the negative terminal. The SSR 406 can also be connected to the battery 408 and configured to turn the relay on and off as specified by the microprocessor 404. Such actions of turning the relay on and off can achieve a desired pulse and rest rate for switching the battery 408 between on and off states. In some embodiments, the SSR 406 can be connected to the positive terminal of the battery 408, which can allow for the current flowing through the system to be turned on or off to the capacitor 412. In some embodiments, the output of the SSR 406 can be connected to the positive side of the capacitor 412.

In some embodiments, the negative terminal of the battery 408 can be connected to the opposite side of the capacitor 412 (i.e., the negative side of the capacitor 412). In some embodiments, the capacitor 412 can be configured to provide a constant and regulated power supply to the load device 414 while the state of the battery 408 is switched between on and off.

While various embodiments have been described above, it should be understood that they have been presented by way of example and not limitation. It will be apparent to persons skilled in the relevant art(s) that various changes in form and detail may be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the systems described may be incorporated into/used in corresponding methods and vice versa.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

## Claims

1. A system for providing alternating direct current comprising:
a first battery;
a second battery;
a load;
a first solid state relay configured to switch the first battery on and off;
a second solid state relay configured to switch the second battery on and off; and
a microprocessor configured to control the first and second solid state relays, wherein the microprocessor is configured to cause the first and second solid state relays to switch the first and second batteries on and off in an alternating manner such that a constant current is supplied to the load.

2. The system of claim 1, wherein the microprocessor is configured to cause the first and second solid state relays to switch the first and second batteries on and off in an alternating manner at a frequency of 144 Hz.

3. The system of claim 1 or clam 2, wherein the microprocessor is powered by an independent power source; and/or
wherein the microprocessor is powered by at least one of the first battery and the second battery.

4. The system of claim 1, claim 2 or claim 3, comprising a diode bridge, wherein the constant current is supplied to the load via the diode bridge.

5. The system of claim 4, wherein:
the first solid state relay is connected to a positive terminal of the first battery and a first end of the diode bridge; and
the second solid state relay is connected to a positive terminal of the second battery and a second end of the diode bridge.

6. The system of claim 5, wherein:
a negative terminal of the first battery is connected to the first end of the diode bridge; and
a negative terminal of the second battery is connected to the second end of the diode bridge.

7. The system of claim 6 comprising a diode connected between the negative terminal of the first battery and the first end of the diode bridge; and/or
comprising a diode connected between the negative terminal of the second battery and the second end of the diode bridge.

8. The system of claim 4 or of any of claims 5 to 7 comprising a capacitor connected between the diode bridge and the load; and, optionally,
wherein a first output of the diode bridge is connected to a positive side of the capacitor and a second output of the diode bridge is connected to a negative side of the capacitor.

9. The system of claim 1 or of any of claims 2 to 8, wherein the microprocessor is configured to cause the first and second solid state relays to switch the first and second batteries on and off in an alternating manner with a rest rate of about five milliseconds.

10. A method for providing alternating direct current comprising:
enabling a first battery to provide current to a load;
disabling the first battery such that the first battery does not provide current to the load;
enabling a second battery to provide current to the load;
disabling the second battery such that the second battery does not provide current to the load; and
repeating the enabling and disabling to provide a constant current to the load.

11. The method of claim 10, wherein enabling the first battery comprises turning the first battery on via a first solid state relay.

12. The method of claim 10 or claim 11, wherein enabling the second battery comprises turning the second battery on via a second solid state relay.

13. The method of claim 10, claim 11 or claim 12,
wherein repeating the enabling and disabling is performed at a frequency of 144 Hz; and/or
wherein repeating the enabling and disabling is performed with a rest rate of about five milliseconds.

14. The method of claim 10, or of any of claims 11 to 13, comprising providing the current to a diode bridge; and, optionally,
comprising providing the current to a capacitor after the diode bridge, the capacitor smoothing the current and providing the constant current to the load.

15. A system for providing alternating direct current comprising:
a battery;
a load;
a solid state relay configured to switch the battery on and off;
a microprocessor configured to control the solid state relay, wherein the microprocessor is configured to cause the solid state relay to switch the battery on and off in an alternating manner such that a constant current is supplied to the load.
